# EUROPÄISCHE PATENTSCHRIFT

(11) **EP 2 139 013 B1**
(45) Veröffentlichungstag und Bekanntmachung des Hinweises auf die Patenterteilung: **14.08.2013**
(21) Anmeldenummer: 09164025.0
(22) Anmeldetag: 29.06.2009
(51) Int. Cl.: H01H 9/18, G09F 13/04, B60Q 3/04, B60K 35/00

(54) **Funktionselement**
Function element
Elément de fonction

(30) Priorität: 27.06.2008 DE 102008030507
(43) Veröffentlichungstag der Anmeldung: 30.12.2009
(73) Patentinhaber: Ditter Plastic GmbH + Co. KG, 77716 Haslach i.K. (DE)
(72) Erfinder: Ditter, Rolf Peter, 77716, Haslach i.K. (DE)
(74) Vertreter: Alber, Norbert

(56) Entgegenhaltungen:
- EP-A- 1 614 586
- WO-A-02/47933
- WO-A-2008/061786
- DE-A1- 10 250 675
- DE-A1- 19 958 582
- DE-A1-102007 029 314
- US-A1- 2006 267 788

## Beschreibung

### I. Anwendungsgebiet

Die Erfindung betrifft ein Funktionselement für Bedien- oder Anzeigepaneele wie etwa am Armaturenbrett eines Kraftfahrzeuges oder die Bedienpaneele einer Maschine.

### II. Technischer Hintergrund

Dort tragen derartige Funktionselemente auf ihrer Frontseite in der Regel ein Symbol oder eine Beschriftung und dienen entweder als Bedientaste zum Ein- und Ausschalten einer Funktion mittels Eindrücken der Taste, oder als reines Anzeigeelement für den momentanen Status, etwa indem das Symbol beleuchtet wird bei eingeschaltetem Status und nicht beleuchtet und damit schlechter oder garnicht sichtbar ist bei ausgeschaltetem Status, oder als reines Dekorelement, z. B. als Beschriftung unter einem digitalen oder analogen Anzeigeelement.

Insbesondere bei den Armaturenbrettern von Kraftfahrzeugen bestehen solche Funktionselemente meist aus einem hülsenförmigen, rechteckigen, Führungskörper, dessen vordere offene Seite einer Frontabdeckung verschlossen ist, auf der das gewünschte Symbol sichtbar sein soll.

Der Führungskörper dient zum formschlüssigen Einsetzen in eine umgebende Struktur - meist das Bedienpaneel - und wird dort entweder fest verrastet - falls es sich um ein unbewegliches Funktionselement handelt - oder in Tiefenrichtung formschlüssig geführt und auf der Rückseite mittels z. B. einer Feder oder Schaltmatte nach vorne vorgespannt, falls es sich um eine Bedientaste handelt.

Bei einem Bedienpaneel kann eine Vielzahl von der Form her gleicher Funktionselemente vorhanden sein, die somit mittels der gleichen Werkzeuge hergestellt werden könnten, die jedoch meist jeweils unterschiedliche Symbole tragen sollen.

Um den Herstellungsaufwand für die verschiedenen Symbole gering zu halten, wurde dies in der Vergangenheit so gelöst, dass die Frontabdeckung - die in aller Regel ebenso wie das gesamte Funktionselement aus Kunststoff besteht - aus einem lichtdurchlässigen Kunststoff hergestellt wurde und mit einem lichtundurchlässigen Lack auf der Frontseite oder Rückseite abgedeckt wurde, der eine Lücke in Form des gewünschten Symbols aufwies. Insbesondere durch Hinterleuchtung ist dann das Symbol sehr gut erkennbar.

Die Lücke in der lichtundurchlässigen Schicht kann entweder bei dessen Aufbringung durch ein entsprechendes Druckverfahren wie etwa Tampondruck der Siebdruck erzeugt werden oder die lichtundurchlässige Schicht wird zunächst durchgängig aufgebracht und anschließend wieder entfernt mittels Ätzen, Lasern oder Ähnlichem, was jedoch immer den Nachteil aufwies, dass dann das darunterliegende, durchsichtige Material meist etwas verfärbt war, sei es durch das Ätzmittel oder durch den energiereichen Laserstrahl.

Da zusätzlich wegen des sich nach hinten, in Tiefenrichtung, an die Frontabdeckung anschließenden Führungskörpers, der vorzugsweise einstückig zusammen mit der Frontabdeckung hergestellt wurde, die Zugänglichkeit zur Frontabdeckung von der Rückseite sehr erschwert war, erfolgte dies jeweils von der Frontseite her.

Eine andere Möglichkeit derartige Symbole in der Frontabdeckung zu erzeugen, ist das Mehrkomponentenspritzen unterschiedlicher, also einerseits lichtdurchlässiger und andererseits lichtundurchlässiger, Kunststoffkomponenten nebeneinander entsprechend dem gewünschten Symbol.

Dies erfordert jedoch jeweils eine neue Form für jedes neue Symbol, was die Herstellung unterschiedlicher Symbole extrem verteuert und deshalb in der Vergangenheit kaum gewählt wurde.

Unabhängig davon ergab sich bei beiden Verfahren jeweils eine nur zweidimensionale optische Wirkung des dargestellten Symbols auf dem Funktionselement für den Betrachter.

Die Schrift DE 19958532A offenbart ein Fanktionselement nach dem Oberbegriff des Anspruchs 1.

### III. Darstellung der Erfindung

### a) Technische Aufgabe

Es ist daher die Aufgabe gemäß der Erfindung, bei einem gattungsgemäßen Funktionselement eine dreidimensionale optische Tiefenwirkung des Symbols bei einem Betrachter zu erzeugen und dies mit möglichst geringem Herstellungsaufwand und trotz der Möglichkeit der Einbringung von Zusatzfunktionen wie etwa Benutzerorientierung oder Anzeige unterschiedlicher Symbole.

### b) Lösung der Aufgabe

Diese Aufgabe wird durch die Merkmale der Ansprüche 1 und 10 gelöst. Vorteilhafte Ausführungsformen ergeben sich aus den Unteransprüchen.

Alleine durch das Anbringen eines Lichtdurchlasses in der lichtundurchlässigen Rückseite der ansonsten lichtdurchlässigen Frontplatte wird bereits eine optische Tiefenwirkung erzielt.

Um diesen Lichtdurchlass in der lichtundurchlässigen Rückseite, die meist durch Lackieren vorher hergestellt wurde, unbeeinträchtigt von dem in Tiefenrichtung sich lang erstreckenden Führungskörper z. B. mittels Laserbeschuss herstellen zu können, werden Frontabdeckung und Führungskörper separat hergestellt und erst nach Herstellen des Lichtdurchlasses miteinander verbunden.

Um das mittels Lichtdurchlass für den Betrachter sichtbare und meist hinterleuchtete Symbol beim Betrachten in einer bestimmten Farbe sichtbar werden zu lassen, wird nach Herstellung des fertigen Lichtdurchlasses von der Rückseite her eine Farbschicht aus lichtdurchlässigem Material in der gewünschten Farbe über den Lichtdurchlass gelegt und kann sich dabei auch über die gesamte Rückseite der Frontabdeckung, also auch über die noch vorhandene lichtundurchlässige Schicht, hinweg erstrecken, so dass das Aufbringen mittels Lackieren, Bedrucken oder Bedampfen kein Problem darstellt.

Um die optische Tiefenwirkung zu verbessern, wird in Form des gewünschten Symbols nicht nur ein Lichtdurchlass in der lichtundurchlässigen Schicht hergestellt, sondern zusätzlich in der darunterliegenden lichtdurchlässigen Frontplatte deckungsgleich eine entsprechend geformte vertiefte Struktur oder auch eine erhabene Struktur.

Das Herstellen einer vertieften Struktur kann theoretisch auf unterschiedliche Art und Weise wie Heißprägen oder Urformen beim Herstellen der Frontabdeckung erfolgen, wird vorzugsweise jedoch ebenfalls mittels Laserbeschuss von der Rückseite her erzeugt, nachdem die lichtundurchlässige Schicht im gewünschten Bereich abgetragen wurde.

Je tiefer die vertiefte Struktur in die Dicke der Frontabdeckung eindringt, umso stärker ist in der Regel der optische dreidimensionale Effekt.

Ein optischer dreidimensionaler Effekt kann jedoch auch durch eine bezogen auf die Rückseite der lichtdurchlässigen Frontplatte erhabene Struktur erzielt werden, was mittels Laser dadurch geschehen kann, dass das umgebende Material der Frontplatte um die gewünschte erhabene Struktur herum weggebrannt wird.

Dann ist vorher kein Auftragen einer lichtundurchlässigen Schicht auf der Rückseite der lichtdurchlässigen Frontplatte notwendig, sondern diese muss nach dem Wegbrennen des umgebenden Materials erst aufgebracht werden.

Statt dies mittels Lackieren zu bewerkstelligen, wird vorzugsweise eine Schwärzung dieser übrigen Oberflächenbereiche um die erhabene Struktur herum ebenfalls mittels Laserbeschuss durchgeführt, indem dabei die Energie des Lasers so hoch eingestellt wird - bezogen auf den Auftreffpunkt - dass dort eine Schwärzung des Kunststoffmaterials eintritt, während bei Bearbeitung der Oberfläche der vertieften oder erhabenen Struktur mittels Laser die Energie - vor allem beim Abtrag der letzten Schicht - so eingestellt werden muss, dass die lichtdurchlässige Eigenschaft der Oberfläche der erhabenen oder vertieften Struktur erhalten bleibt.

Um die dreidimensionale optische Tiefenwirkung zu verstärken, können die vertieften Strukturen wenigstens einen linsenförmigen Boden aufweisen oder insgesamt im Querschnitt linsenförmig gestaltet sein, so dass bei Hinterleuchtung das Licht nach außen gestreut wird und aus verschiedenen Richtungen im Wesentlichen gleich gut betrachtet werden kann.

Wird dagegen eine optische Wirkung mittels einzelner konvexer Erhebungen auf der Rückseite der lichtdurchlässigen Schicht erzielt, so wird das Licht einer Hinterleuchtung nach vorne zum Betrachter hin gebündelt und an bestimmten Punkten, bzw. aus bestimmten Richtungen, ist das Symbol dann besonders lichtstark zu erkennen.

Dabei spielt es keine Rolle, ob diese konvexen Erhebungen mit einer Linsenwirkung Bestandteil einer insgesamt erhabenen Struktur auf der Rückseite der lichtdurchlässigen Schicht 3a sind, oder auch Bestandteil einer vertieften Struktur. Auch der Querschnitt einer erhabenen Struktur insgesamt kann eine solche konvexe Linsenwirkung besitzen, die dementsprechend auch auf einem bestimmten Betrachtungspunkt als Brennpunkt der Linsenwirkung gerichtet sein kann, von dem aus dann das Symbol besonders gut oder überhaupt nur von diesem Betrachtungspunkt aus zu erkennen ist.

Gleiches kann bei mehreren, nebeneinander liegenden Erhebungen mit Linsenwirkung dadurch erreicht werden, dass alle auf einem gemeinsamen Brennpunkt hin fokussiert und ausgerichtet sind.

Eine Benutzerzuordnung kann ferner auch bei einer vertieften Struktur durch eine definierte Beschussrichtung des Lasers beim Herstellen der vertieften Struktur erreicht werden:
Sofern es sich um einzelne Einschusskanäle handelt - aus denen das Symbol zusammengesetzt ist - wird das Symbol in Form der vertieften Struktur besonders gut aus einer Blickrichtung erkennbar sein, die auf der Verlängerung der Beschussrichtung nach vorne liegt.

An den dann parallel zueinander verlaufenden Seitenwänden der einzelnen Einschusskanäle werden die Lichtstrahlen der Hinterleuchtung reflektiert und am Boden des sacklochförmigen Einschussloches konzentriert in die lichtdurchlässige Schicht hinein.

Die dreidimensionale Wirkung kann ferner durch schräg zur Hauptebene der Frontplatte verlaufende Seitenwände einer vertieften Struktur verstärkt werden.

Dies kann entweder durch schrägen Einschuss mittels Laser erreicht werden oder durch schichtweisen Abtrag der vertieften Struktur durch einen Laser, wobei die Schichten am Rand stufig zueinander versetzt sind und dadurch eine schräge Seitenfläche ergeben.

Die Stufung ist dabei so gering, dass sie in der Regel mit bloßem Auge nicht mehr zu erkennen ist.

Ferner können ein und dasselbe Symbol oder auch zwei verschiedene Symbole hergestellt werden durch Laserbeschuss aus zwei verschiedenen Beschussrichtungen und anschließend durch entsprechende Beleuchtung mit gerichtetem Licht, beispielsweise jeweils einer Leuchtdiode mit vorgeschalteter Blendeneinrichtung, indem nur eines der beiden Symbole abwechselnd zum Leuchten gebracht wird.

Dies kann in ein und derselben Rückseite des lichtdurchlässigen Materials vorgenommen werden oder es können hierfür übereinander liegende, verschiedene Schichten benutzt werden, die jeweils lichtdurchlässig sind, jedoch Laserlicht unterschiedlicher Frequenzen absorbieren.

Auf diese Art und Weise können auch in einer tiefer liegenden, abgedeckten Schicht Hohlräume, also vertiefte Strukturen in der Rückseite dieser Schicht, erzeugt werden, ohne die darüberliegende Schicht zu beeinträchtigen, indem der Beschuss für jede Schicht mittels einem Laser der entsprechenden Wellenlänge erfolgt.

In diesem Fall empfiehlt sich eine Beleuchtung der so entstehenden Symbole nicht von der Rückseite her, sondern von der Seite durch Lichteinbringung jeweils getrennt in die einzelnen Schichten, während die Rückseite durchgängig mit einer lichtundurchlässigen Schicht abgedeckt ist.

Die Frontabdeckung besteht außer der lichtdurchlässigen Schicht, in der das Symbol erzeugt wird, aus einem im äußeren Randbereich auf der Rückseite umlaufenden Schweißrahmen aus lichtundurchlässigem, z. B. schwarzem, Kunststoff, bei dem es sich vorzugsweise um das gleiche Material handelt, wie dem Material des Führungskörpers.

Anschließend, also nach Herstellung des Symbols in Form des Lichtdurchlasses und/oder der erhabenen und vertieften Struktur, wird die Frontabdeckung auf der vorderen offenen Stirnfläche des Führungskörpers durch Verschweißen, vorzugsweise mittels Ultraschall oder auch mittels Laser, fixiert.

Für das Ultraschall-Verschweißen sind auf der Rückseite des Schweißrahmens vorzugsweise Schweißerhebungen vorgesehen, die das Schweißmaterial bilden, welches bei Erhitzung mittels Ultraschall das Verschweißen bzw. Verkleben bewirkt.

Die Frontplatte und der Schweißrahmen sind vorzugsweise einstückig miteinander ausgebildet und durch einen mehrstufigen Spritzprozess hergestellt.

Anstelle der Einbringung lediglich einer erhabenen oder vertieften Struktur auf der Rückseite der durchsichtigen Frontplatte kann dort auch ein komplettes Hologramm oder auch ein Vexierbild eingebracht werden.

Ebenso ist es möglich, nicht nur ein dreidimensional wirkendes Symbol, sondern ein tatsächlich dreidimensionales Symbol im Inneren, also im Dickenbereich, der lichtdurchlässigen Frontplatte auszubilden:
Dies ist möglich, indem zwei sich kreuzende Laserstrahlen benutzt werden, deren einzelne Energie nicht ausreicht, um das Material der Frontplatte zu verändern, wobei jedoch die addierte Energie hierfür an ihrem Kreuzungspunkt ausreichend ist.

Dieser Kreuzungspunkt kann durch entsprechende Steuerung des Lasers dreidimensional im Inneren der Frontplatte verfahren werden, so dass dort das gewünschte dreidimensionale Bild erzeugt wird.

Anstelle durch Beschuss mittels Laser können dreidimensionale erhabene oder vertiefte Strukturen und ebenso auch die Lücke in der lichtundurchlässigen Schicht auf der Rückseite der Frontplatte auch durch andere Methoden wie etwa Umformen oder Urformen, also beim Herstellen der Frontplatte mittels Spritzen oder nachträglichem Detailstempel etc. hergestellt werden. Dies ist jedoch nachteilig, da dann in der Regel jeweils neue Werkzeuge für ein neues Symbol benötigt werden.

Gleiches gilt für das Herstellen von lichtdurchlässigen Bereichen in einer ansonsten nicht lichtdurchlässigen Kunststoffschicht mittels Mehrkomponentenspritzen, in dem diese beiden Kunststoffarten nebeneinander gezielt angeordnet werden und dadurch die lichtdurchlässigen Bereiche - die natürlich von der Vorderseite bis zur Rückseite durchgehend lichtdurchlässig sein müssen - nebeneinander angeordnet werden.

### c) Ausführungsbeispiele

Funktionselement und Frontabdeckungen im Zusammenhang mit der Erfindung sind im Folgenden beispielhaft näher beschrieben, wobei bei den Frontabdeckungen der Figuren 3, 4a, b, d, e, und 5a, b die Farbschicht 17 gemäß Anspruch 1 noch nicht aufgebracht ist. Es zeigen:
- Fig. 1:: das fertig montierte Funktionselement in perspektivischer Ansicht,
- Fig. 2.: das Funktionselement der Figur 1 im Längsschnitt,
- Fig. 3:: eine Aufsicht auf die Frontabdeckung von der Rückseite,
- Fig. 4:: Varianten von verschiedenen Lichtdurchlässen 4, und
- Fig. 5:: überlagernde Lösungen.

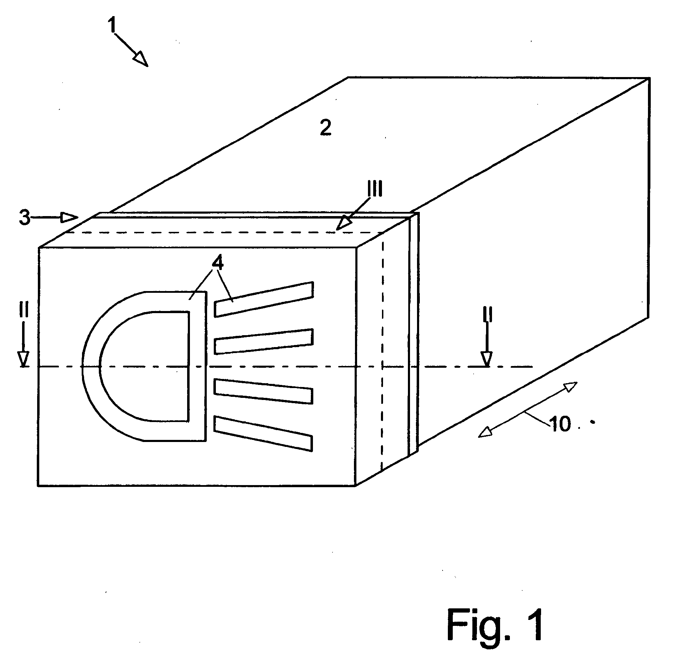

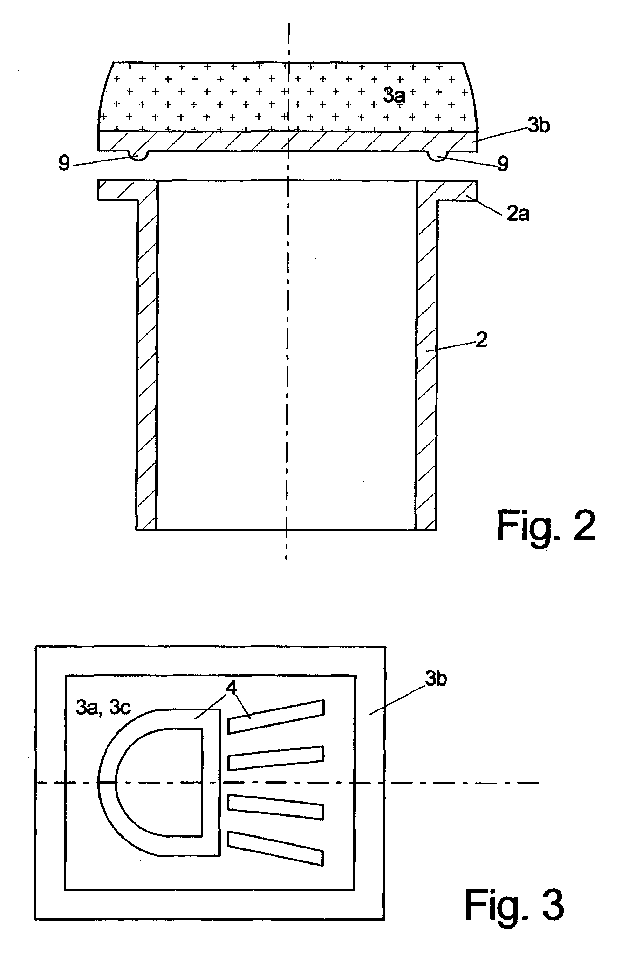

Figur 1 zeigt das fertig hergestellte Funktionselement 1 mit seiner plattenförmigen Frontabdeckung 3, die eben oder gebogen sein kann und zwar sowohl auf der Front- oder Rückseite und bei dem sich von der Rückseite der Frontabdeckung 3 in Tiefenrichtung 10, der wenigstens nach vorne offene Führungskörper 2 erstreckt. In diesem Fall ist der Führungskörper - wie am besten der Längsschnitt der Figur 2 zeigt - auch am hinteren Ende offen und weist lediglich am vorderen Ende einen radial nach außen vorstehenden Rand 2a auf.

Die beiden Teile sind mittels Ultraschall-Verschweißen einstückig miteinander verbunden, weshalb vor dem Verschweißen auf der Rückseite 3' der Frontabdeckung 3 Schweiß-Erhebungen 9 nach hinten vorstehen, welche das Schweißmaterial für das Ultraschallverschweißen darstellen und beim Einbringen der Ultraschall-Schwingungen unter Druck und Gegeneinanderpressen der beiden Teile erhitzt werden und die beiden Teile gegeneinander verkleben bzw. verschweißen.

Wenn die Frontabdeckung 3 in der Hauptsache aus einer lichtdurchlässigen Frontplatte 3a besteht, würde man diese Verschweißung von vorne durch die lichtdurchsichtige Frontplatte 3a hindurch, die in der Regel über ihre gesamte Fläche durchlässig ist, erkennen können.

Um dies zu vermeiden, ist auf der Rückseite der lichtdurchlässigen Frontplatte 3a - wie am besten in Figur 3 zu erkennen - ein entlang des Randbereiches umlaufender, durchgehender Schweißrahmen 3b aus lichtundurchlässigem Material und insbesondere dem gleichen Material wie das des Führungskörpers 2 aufgebracht, der natürlich ultraschall-siegelfähig sein muss, also in der Regel ein thermoplastisches Material.

Schweißrahmen 3b und lichtdurchlässige Frontplatte 3a sind dabei in der Regel einstückig miteinander in einem mehrstufigen Kunststoffspritzverfahren hergestellt.

Zur Darstellung des gewünschten Symbols auf dem Funktionselement 1 ist die Rückseite der durchsichtigen Frontplatte 3a mit einer lichtundurchlässigen Schicht 3c abgedeckt, die einen oder mehrere Lichtdurchlässe 4 in Form des gewünschten Symbols aufweist.

Diese Lichtdurchlässe 4 können lediglich eine Unterbrechung in der lichtundurchlässigen Schicht 3c sein oder zusätzlich eine bezüglich der lichtdurchlässigen Frontplatte 3 erhabene oder - wie in Figur 2 dargestellt - eine vertiefte Struktur 5 im Bereich des Durchlasses 4 umfassen.

Ist im Inneren des Funktionskörpers 2 - vorzugsweise in dessen hinteren Bereich oder außerhalb hinter dem Funktionselement 1 - eine Lichtquelle wie etwa eine Leuchtdiode 6 zum Hinterleuchten des Symbols angeordnet, so entsteht bereits allein durch die Dicke der dem lichtdurchlässigen Durchlasses 4 gelagerten lichtdurchlässigen Frontplatte 3a eine dreidimensionale Wirkung dieses Symbols.

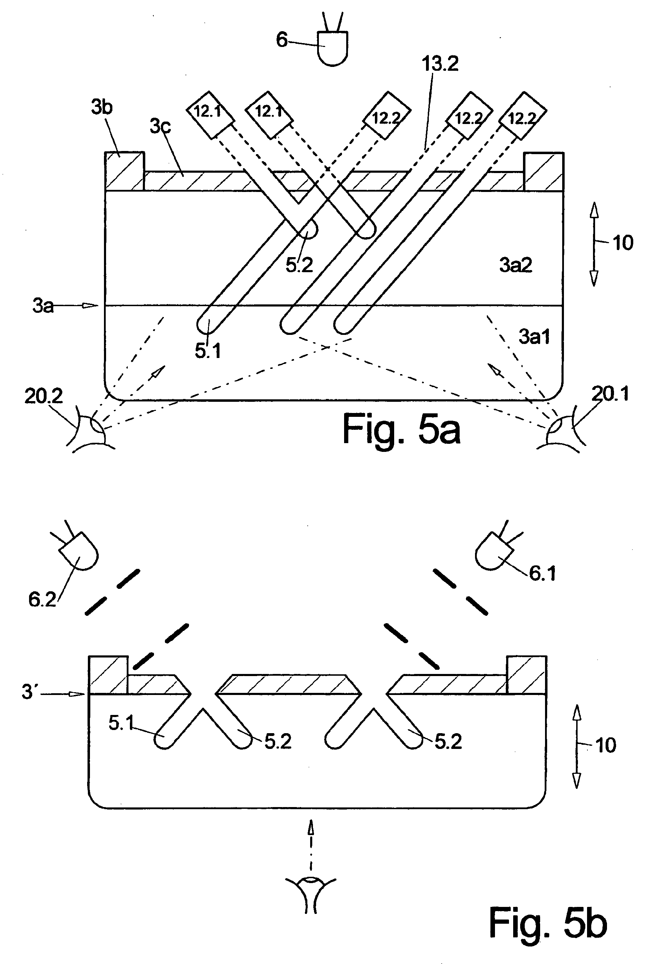

Diese dreidimensionale Tiefenwirkung wird noch verstärkt und kann sehr gut gesteuert werden durch die vorerwähnten vertieften oder erhabenen Strukturen 5, 5' zusätzlich zur Unterbrechung in der lichtundurchlässigen Schicht 3', wie anhand der folgenden Figuren 5 läutert.

Dabei ist es für die optische Wirkung im wesentlich unabhängig, ob erhabene oder vertiefte Strukturen 5 auf der Rückseite 3' der durchsichtigen Abdeckplatte 3a mittels Formwerkzeugen, mittels Ätzen, mittels mechanischer Bearbeitung wie Fräsen oder mittels Abbrennen bzw. Verdampfen mittels Laser, hergestellt werden.

Da es sich bei einer solchen Frontplatte 3a in der Regel um eine Größe von wenigen cm² handelt, wird unter dem Gesichtspunkt der Herstellkosten eine mechanische Spanabnahme kaum in Betracht kommen, zumal sie keine klar durchsichtige Oberfläche hinterlässt.

Eine Herstellung mittels Formen, z. B. beim Spritzgießen dieser Frontplatte 3a oder Einpressen mittels eines Heißstempels, erfordert für jedes neu darzustellende Symbol in der Regel ein neues Werkzeug, es sei denn, dass ein Einheitswerkzeug mit kleiner Fläche mehrfach hintereinander an derselben Frontplatte 3a eingesetzt wird, was bei komplizierten Symbolen kaum realisierbar ist.

Eine Materialentfernung mittels Laser hat jedoch den Nachteil, dass durch die Hitzeentwicklung des Lasers am Auftreffpunkt - die erst das Verdampfen bzw. Abbrennen des Materials bewirkt - die Oberfläche des zurückbleibenden Materials in der Regel dunkel verfärbt wird.

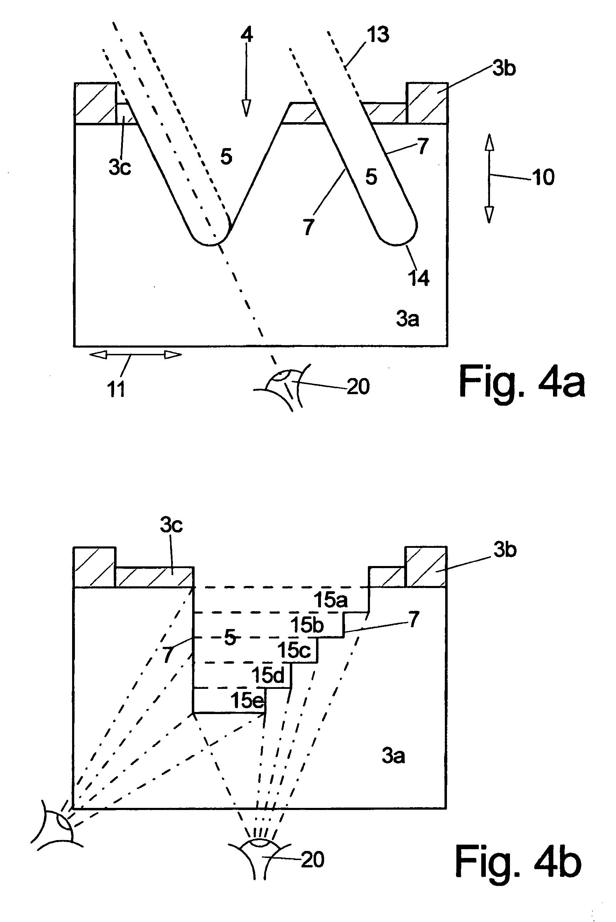

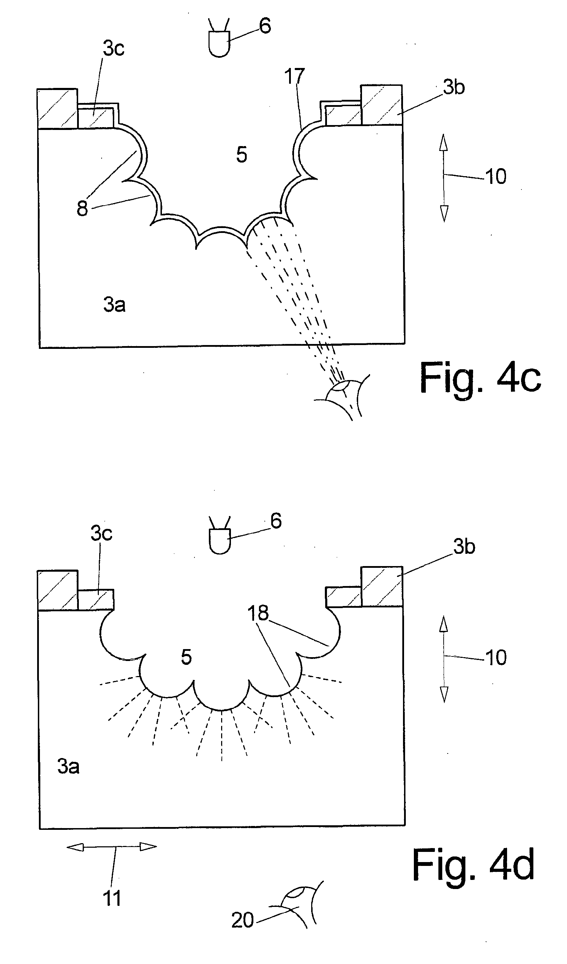

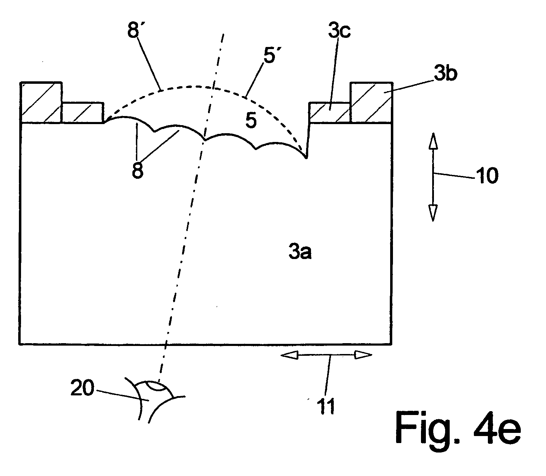

Die Figuren 4 und 5 zeigen die Frontabdeckung 3.

In allen Fällen sollen die Frontabdeckungen 3 von ihrer Rückseite 3' her mittels einer Diode 6 hinterleuchtet werden und weisen auf ihrer Rückseite eine lichtundurchlässige Schicht 3c auf, die als Lichtdurchlass 4 eine Unterbrechung, also Lücke in Form des gewünschten Symbols, aufweist, so dass der Betrachter dieses hinterleuchtete Symbol in der Form der Lücke erkennen kann und eine 3D-Wirkung in Tiefenrichtung 10 allein schon aufgrund der Dicke der vorgelagerten durchsichtigen Frontplatte 3a eintritt.

Diese Tiefenwirkung wird auf unterschiedliche Weise verstärkt.

In Figur 4a ist beispielsweise anhand der linken, im Querschnitt kegelförmigen, vertieften, Struktur 5 gut ersichtlich, dass diese - betrachtet von einem vor der Frontplatte 3a liegenden Betrachtungspunkt 20 aus - optisch dreidimensional erscheint, also eine Tiefenwirkung in Tiefenrichtung 10 ergibt, die abhängig von der Position des Betrachtungspunktes 20 in Querrichtung 11 mehr oder weniger stark ist.

Bei der rechten vertieften Struktur 5, die parallele Seitenwände 7 aufgrund der entsprechenden Beschussrichtung 13 des Lasers 12 beim Herstellen der vertieften Struktur 5 aufweist, wird das Licht der Leuchtdiode 6 an diesen Seitenwänden 7 zum Großteil reflektiert und erst am Boden 14 der vertieften Struktur 5 in die Frontplatte 3a eindringen.

Dies bewirkt, dass vor allem von einem Betrachtungspunkt 20, der auf der verlängerten Linie der Beschussrichtung 13 liegt, das Symbol besonders scharf und lichtintensiv gesehen wird, von allen anderen Betrachtungsrichtungen aus der Boden 14 als weniger lichtintensiv gesehen wird und die dem Betrachtungspunkt 20 zugewandte Seitenfläche als noch weniger lichtintensive Nebenfläche, wie ein Art Schattenbildung, gesehen wird.

Dieser Effekt kann beispielsweise dazu genutzt werden, dass von einem vorher definierten Betrachtungspunkt aus, beispielsweise den Augen des Fahrers eines Kraftfahrzeuges aus, dieses Symbol besonders deutlich zu erkennen ist, von der Position des Beifahrers aus dagegen weniger intensiv erkannt wird oder gar völlig unsichtbar ist.

Auf diese Art und Weise können einzelne Funktionselemente je nach Betrachtungspunkt einzelnen Nutzern zugeordnet werden.

Figur 4b zeigt eine vertiefte Struktur 5, bei der der Materialabtrag in der Frontplatte 3a nacheinander in Schichten 15a, b immer tiefer ins Material hinein erfolgte, wobei die erste zu entfernende Schicht die der lichtundurchlässigen Schicht 3c ist.

Auf der linken Seite decken sich die Ränder der überlagernden abgenommenen Schichten 15a, b, während sie auf der rechten Seite stufig versetzt sind, indem die nächst tiefer liegende Schicht jeweils weniger weit nach außen geht als die darüberliegende Schicht. Auf diese Art und Weise kann eine gestufte, schräge Seitenwand 7 erzeugt werden oder auch eine zur Hauptebene der Fronplatte 3a lotrechte Seitenwand 7, wie auf der linken Seite dargestellt.

Vor allem bei einer Betrachtung genau von vorne, ergibt eine schrägstehende Seitenwand eine besonders starke optische Tiefenwirkdung. Die Stufigkeit, die hier übertrieben stark dargstellt ist, ist bei Abtragen mittels Laser und Schichten von wenigen 1/10 oder 1/100mm Dicke gering, dass sie mit bloßem Auge in der Regel nicht zu erkennen ist.

Sollte dies dennoch ein Problem darstellen, kann durch anschließenden Schrägbeschuss mittels Laser in einer Beschussrichtung parallel zur Schrägstellung der gestuften Seitenwand 7 eine Einebnung der stufigen Erhebungen durchgeführt werden.

Auf diese Art und Weise können sogar dreidimensionale, hologrammartige Körper hergestellt werden. Auch ein voll funktionsfähiges Hologramm kann in die Frontplatte 3a, insbesondere der en Rückseite 3', eingearbeitet werden.

Ebenso kann die optische Wirkung auf den Betrachter mittels Linsenwirkung gesteuert werden:
Bei einer vertieften Struktur 5 - wie in Figur 4c dargestellt - kann die Oberfläche der vertieften Struktur 5 im Querschnitt betrachtet aus einzelnen, konvexen, linsenförmigen Erhebungen 8 bestehen, deren Krümmung und/oder Lage so gewählt sind, dass beispielsweise ihr Brennpunkt mit einem vorher definierten Betrachtungspunkt 20 übereinstimmt, von dem aus das Symbol dann besonders lichtstark aufgrund der Lichtbündelung erkannt werden kann.

Umgekehrt kann gemäß Figur 4d eine Lichtstreuung zum Betrachter hin erreicht werden und damit eine gleich gute Erkennbarkeit von unterschiedlichen Betrachtungspunkten 20 in Querrichtung 11 verteilt, wenn entweder die vertiefte Struktur 5 insgesamt eine konkave linsenförmige Form besitzt oder/und sie aus konkaven Vertiefungen 18 zusammengesetzt ist, die jeweils eine linsenförmige Funktion erfüllen.

Des Weiteren ist in Figur 4c dargestellt, dass nach Herstellen der Vertiefung 5 oder überhaupt des Lichtdurchlasses 4 von der Rückseite her auf die Frontabdeckung 3a immer eine Farbschicht 17 aufgebracht ist, die lichtdurchlässig ist, um das vor allem von hinten, von einer späteren Beleuchtung hindurchtretende Licht für den Betrachter in einer bestimmten Farbe erscheinen zu lassen, ohne dass hierfür entweder die Lichtquelle oder die durchsichtige Frontabdeckung 3a diese Farbe aufweisen muss.

Figur 4e zeigt die Ausbildung von konvexen Erhebungen 8 im Wesentlichen nebeneinander in der Hauptebene der Rückseite 3', jedoch jeweils so geschwenkt, dass alle diese konvexen Erhebungen 8 einen gemeinsamen Brennpunkt aufweisen, nämlich den vorher festgelegten, voraussichtlichen Betrachtungspunkt 20 des Benutzers.

Alternativ zeigt Figur 4e mit einer gestrichelten Linie eine einzige erhabene linsenförmige Kontur 5 mit im Querschnitt einer einzigen Erhebung 8', die ebenfalls das Licht der Hinterleuchtung zu einem bestimmten Beobachtungspunkt 20 hin bündelt und damit im Wesentlichen die gleiche Funktion erfüllt.

Die verbleibende lichtundurchlässige Schicht 3c kann entweder ein vorher aufgebrachter lichtundurchlässiger Lack oder Kunststoff sein, der im Bereich des Symbols vom Leser weggebrannt oder anderweitig entfernt wird, oder es kann ein bei der Leserbearbeitung durch gezielten Energieeintrag hergestellte geschwärzte Schicht des Materials der Frontplatte 3a sein.

Des Weiteren zeigen die Figuren 5 mögliche Überlagerungslösungen:
In Figur 5a ist die lichtdurchlässige Frontplatte 3a mehrschichtig aus unterschiedlichen Materialien 3a1 und 3a2 aufgebaut, die das Licht unterschiedlicher Laser-Frequenzen absorbieren können und somit auf ihrer jeweiligen Rückseite - durch das eventuell vorgelagerte Material hindurch - mittels unterschiedlicher Laser 12.1 bzw. 12.2 bearbeitet werden, also in diesem Fall vertiefte Strukturen 5.1 bzw. 5.2 in ihren jeweiligen Rückseiten erzeugt werden.

Die beiden Strukturen 5.1 und 5.2 können sich ganz oder teilweise überlagern, und von der Form her identisch jedoch zueinander versetzt sein, je nachdem, ob sie gleichzeitig oder abwechselnd sichtbar gemacht werden bzw. gleichzeitig oder abwechselnd vom Betrachter gesehen werden.

Das gleichzeitige Sehen ergibt besonders eindrucksvolle optische Effekte des Symbols. Das abwechselnde Sehen kann dazu benutzt werden, um unterschiedliche Symbole auf ein und demselben Funktionselement abwechselnd darzustellen:
Bei der Lösung der Figur 5a erfolgt die Hinterleuchtung wie bei allen übrigen Beispielen von hinten mittels einer Leuchtdiode 6, aufgrund der unterschiedlichen Beschussrichtungen 13.1 und 13.2 der beiden Laser 12.1 und 12.2 sind die beiden Symbole in Form der vertieften Strukturen 5.1 und 5.2 von unterschiedlichen Betrachtungspunkten 20.1 und 20.2 - die vorzugsweise jeweils auf der Verlängerung der Beschussrichtung des Lasers nach vorne liegen - aus jeweils unterschiedlich gut zu erkennen, wobei das jeweils andere Symbol wesentlich lichtschwächer bzw. kaum zu sehen ist.

Der gleiche Effekt wird bei der Lösung gemäß Figur 5b mit nur einer einzigen lichtdurchlässigen Frontplatte 3a dadurch erreicht, dass die beiden unterschiedlichen vertieften Strukturen 5.1 und 5.2 durch unterschiedliche Laser-Beschussrichtungen 13.1, 13.2 erzeugt werden und auch die Hinterleuchtung mit gerichtetem Licht, also insbesondere zwei unterschiedlichen Leuchtdioden 6.1 und 6.2 sowie gegebenenfalls vorgelagerten Blendeneinrichtungen 16.1 und 16.2, beleuchtet werden.

Dies bewirkt, dass bei Einschalten der einen Leuchtdiode 6.1 primär das Symbol der Struktur 5.1 auf dem Funktionselement 1 erkennbar wird, bei Einschalten nur der Dioden 6.2 dagegen primär das Symbol der Struktur 5.2.

### BEZUGSZEICHENLISTE

- 1: Funktionselement
- 2: Führungskörper
- 2a: Rand
- 3: Frontabdeckung
- 3a: Frontplatte (klar)
- 3b: Schweißrahmen (undurchsichtig, schwarz)
- 3c: lichtundurchlässige Schicht
- 3': Rückseite
- 4: Lichtdurchlass
- 5, 5': vertiefte/erhabene Struktur
- 6: Leuchtdiode
- 7: Seitenwand
- 8: Erhebung
- 9: Schweißerhebung
- 10: Tiefenrichtung
- 11: Querrichtung
- 12: Laser
- 13: Beschussrichtung
- 14: Boden
- 15a, b: Schicht
- 16a, b: Blendeneinrichtung
- 17: Farbschicht
- 18:
- 19: Hauptstelle
- 20: Betrachtungspunkt

## Patentansprüche

1. Funktionselement (1), insbesondere zur Verwendung als Bedientaste, Dekorelement oder Anzeigeelement, mit
- einer Frontabdeckung (3) mit wenigstens einem Lichtdurchlass (4),
- die auf der vorderen, offenen Seite eines Führungskörpers (2) fixiert ist, insbesondere unlösbar fixiert ist, der sich von der Frontabdeckung (3) aus nach hinten in Tiefenrichtung (10) erstreckt,
- der Lichtdurchlass (4) auf der dem Führungskörper (2) zugewandten Rückseite (3') der Frontabdeckung (3) angeordnet ist, und
- die Frontabdeckung (3) aus einer lichtdurchlässigen Frontplatte (3a) und einer auf ihrer Rückseite aufgebrachten lichtundurchlässigen Schicht (3c) besteht, die von dem Lichtdurchlass (4) durchsetzt ist,
**dadurch gekennzeichnet, dass**
- die lichtdurchlässige Frontplatte (3a) auf ihrer Rückseite (3') einen entlang des Umfanges umlaufenden, lichtundurchlässigen Schweißrahmen (3b) in ihren äußeren Randbereichen aufweist,
- der Lichtdurchlass (4) zusätzlich aus einer gegenüber der Rückseite (3') in Tiefenrichtung (10) vertieften oder erhabenen Struktur (5, 5') besteht,
- auf der Rückseite der Frontabdeckung (3) wenigstens im Bereich des Lichtdurchlasses (4) eine Farbschicht (17) aus lichtdurchlässigem Material angeordnet ist.

2. Funktionselement nach einem der vorhergehenden Ansprüche,
**dadurch gekennzeichnet, dass**
- die Frontplatte (3a) und der Schweißrahmen (3b) einstückig miteinander ausgebildet sind, insbesondere verschweißt sind, und/oder
- das Funktionselement (1) im Führungskörper (2), insbesondere am hinteren Ende des Führungskörpers (2), eine Lichtquelle, insbesondere eine Leuchtdiode (6), aufweist.

3. Funktionselement nach einem der vorhergehenden Ansprüche,
**dadurch gekennzeichnet, dass**
- eine vertiefte Struktur (5) im Querschnitt betrachtet wenigstens einen linsenförmigen Boden (14), insbesondere einen linsenförmigen Querschnitt, aufweist,
- die Farbschicht (17) aus lichtdurchlässigem Material sich auch auf die Rückseite der lichtundurchlässigen Schicht (3c) erstreckt.

4. Funktionselement nach einem der vorhergehenden Ansprüche,
**dadurch gekennzeichnet, dass**
- die Seitenwände (7) einer vertieften Struktur (5) parallel zueinander verlaufen in wenigstens einer definierten Richtung, insbesondere in zwei einander kreuzenden Richtungen, und/oder
- die Seitenwände (7) der vertieften Struktur stufenartig schräg zur Hauptebene (19) verlaufend ausgebildet sind,
- die Oberfläche der erhabenen vertieften Struktur (5, 5') aus einer Vielzahl nebeneinander liegender, insbesondere linsenförmiger, Erhebungen (8) besteht, die sich entweder nur in Querschnittsrichtung aneinander anschließen, oder auch in Längsrichtung der vertieften Struktur (5), und insbesondere
- die Brennpunkte der zur Lichtquelle hin gerichteten Erhebungen (8), wenigstens im Querschnitt der erhabenen Struktur (5) betrachtet, sich an einen gemeinsamen Punkt treffen.

5. Funktionselement nach einem der vorhergehenden Ansprüche,
**dadurch gekennzeichnet, dass**
- der Führungskörper (2) einen in Tiefenrichtung (10) betrachtet umlaufend geschlossenen Querschnitt besitzt,
- der Führungskörper (2) am hinteren Ende offen ist, und
- der Führungskörper (2) am vorderen Ende einen nach außen vorstehenden, umlaufenden Rand (2a) aufweist.

6. Funktionselement nach einem der vorhergehenden Ansprüche,
**dadurch gekennzeichnet, dass**
- die Frontabdeckung (3) aus von der Vorderseite bis zur Rückseite (3') durchgehenden, nebeneinander liegenden Bereichen mit einerseits lichtdurchlässigen und andererseits lichtundurchlässigen Materialien, insbesondere Kunststoffen, besteht, und insbesondere
- bei mehreren abwechselnd lichtdurchlässigen, lichtundurchlässigen, nebeneinander liegenden, Materialbereichen die Trennflächen definiert schräg zur Tiefenrichtung (10) liegen.

7. Funktionselement nach einem der vorhergehenden Ansprüche,
**dadurch gekennzeichnet, dass**
- auf der Rückseite (3') der Frontabdeckung im Bereich des Lichtdurchlasses (4) ein Hologramm angeordnet ist, und/oder
- die erhabene Struktur (5) oder die vertiefte Struktur (5') so angeordnet ist, dass bei Beleuchtung mittels zwei verschiedener Lichtquellen aus zwei verschiedenen Beleuchtungsrichtungen von der Vorderseite zwei unterschiedliche Symbole erkennbar sind, und insbesondere
- der Querschnitt der erhabenen Struktur (5')so konkav gebogen ist, dass eine Linsenform entsteht, deren Brennpunkt in Richtung des Betrachters weist und in einem vorher definierten externen Betrachtungspunkt liegt.

8. Funktionselement nach einem der vorhergehenden Ansprüche,
**dadurch gekennzeichnet, dass**
- auf der Rückseite des Schweißrahmens (3b) punktuelle oder linienförmige, dann entlang der Umlaufrichtung verlaufende, Schweißerhebungen (9) angeordnet sind, und/oder
- die Frontplatte (3a) aus durchgefärbtem, lichtdurchlässigem Material besteht.

9. Funktionselement nach einem der vorhergehenden Ansprüche,
**dadurch gekennzeichnet, dass**
- die lichtdurchlässige Frontplatte (3a) aus mehreren Schichten (2a1, 3a2) unterschiedlicher lichtdurchlässiger Materialien besteht, die jeweils Laserlicht unterschiedlicher Frequenzen absorbieren und insbesondere die Lichtquelle seitlich zur jeweiligen Schicht angeordnet ist, und/oder
- im Inneren der lichtdurchlässigen Schicht (3a) ein real dreidimensionales Symbol vorhanden ist.

10. Verfahren zum Herstellen eines Funktionselementes (1), insbesondere zur Verwendung als Bedientaste, Dekorelement oder Anzeigeelement, mit
- einer Frontabdeckung (3) mit wenigstens einem Lichtdurchlass (4),
- die auf der vorderen, offenen Seite eines Führungskörpers (2) fixiert ist, der sich von der Frontabdeckung (3) aus nach hinten in Tiefenrichtung (10) erstreckt,
- der Lichtdurchlass (4) auf der dem Führungskörper (2) zugewandten Rückseite (3') der Frontabdeckung (3) angeordnet ist,
wobei
- zunächst der Lichtdurchlass (4) an der Frontabdeckung (3) hergestellt wird, indem auf die Rückseite (3c) der lichtdurchlässigen Frontplatte (3a) eine lichtundurchlässige Schicht (3c) aufgebracht wird und in dieser Schicht (3c) Unterbrechungen als Lichtdurchlass entweder durch nachträgliches Entfernen der lichtdurchlässigen Schicht (3c) z. B. durch Laserbeschuss oder durch Abdeckungen auf der Rückseite (3c) beim Aufbringen der lichtdurchlässigen Schicht (3c) erzeugt werden,
- anschließend die Frontabdeckung (3) auf der vorderen Stirnfläche des Führungskörpers (2) fixiert, insbesondere verschweißt wird, und
- zuvor die Frontabdeckung (3) hergestellt wird durch einstückige Verbindung einer lichtdurchlässigen Frontplatte (3a) und einem damit verbundenen, auf der Rückseite (3') der Frontplatte (3) angeordneten, über den gesamten Umfang umlaufenden, Schweißrahmen (3b) aus lichtundurchlässigem Material,
**dadurch gekennzeichnet, dass**
- zusätzlich zur Lücke (4) in der lichtundurchlässigen Schicht (3c) auf der Rückseite (3') der lichtdurchlässigen Frontplatte (3a) deckungsgleich eine vertiefte Struktur (5) oder erhabene Struktur (5') in Form des gewünschten Symbols erzeugt wird,
- auf der Rückseite der Frontabdeckung (3) im Bereich des Lichtdurchlasses (4) eine Farbschicht (17) aus lichtdurchlässigem Material aufgebracht wird.

11. Verfahren nach einen der vorhergehenden Verfahrensansprüche,
**dadurch gekennzeichnet, dass**
- die Frontabdeckung (3) auf der vorderen Stirnfläche des Führungskörpers verschweißt, insbesondere ultraschallverschweißt ist, und/oder
- die Frontplatte (3a) mit dem Schweißrahmen (3b) einstückig verbunden ist, und/oder
- die vertiefte oder erhabene Struktur (5, 5') mittels Urformen beim Herstellen, insbesondere Kunststoffspritzen, der Frontplatte (3a) erzeugt wird, oder
- die erhabene oder vertiefte Struktur (5, 5') bei einer Frontplatte (3a) aus thermoplastischem Material mittels thermoplastischer Verformung durch Aufprägen eines Heißstempels erfolgt.

12. Verfahren nach einen der vorhergehenden Verfahrensansprüche,
**dadurch gekennzeichnet, dass**
- das Herstellen der vertieften/erhabenen Struktur (5, 5') mittels Beschuss durch einen Laser (12) insbesondere von der Rückseite (3') der Frontplatte (3a) her erfolgt, und/oder
- die vertiefte Struktur (5) durch Einbrennen von Vertiefungen in der Rückseite (3c) mittels Laser (12) erfolgt, und/oder
- das Herstellen der erhabenen Struktur (5') durch Wegbrennen, insbesondere schichtweises Wegbrennen, des Materials der Umgebung der Frontplatte (3a) um die gewünschte erhabene Struktur (5') herum auf der Rückseite (3c) erfolgt, und insbesondere
- die Fokussierung sowie der Abstand des Lasers (12) von der Rückseite (3') so gewählt wird, dass der Boden der erzeugten Vertiefung die gewünschte linsenförmige definierte Krümmung aufinreist.

13. Verfahren nach einen der vorhergehenden Verfahrensansprüche,
**dadurch gekennzeichnet, dass**
- die vertiefte Struktur (5) erstellt wird durch Beschuss mittels eines Lasers (12) aus zwei unterschiedlichen Beschussrichtungen (13a, b), so dass die Seitenwände (7) der jeweiligen Einschusskanäle entsprechend der Beschussrichtungen (13a, b) unterschiedliche Richtungen aufweisen, und/oder
- die Energie des Lasers, bei schichtweisem Abtragen von Material der Frontplatte (3a), wenigstens beim Abtragen der letzten Schicht so gering eingestellt wird, dass die Oberfläche des verbleibenden Materials der Frontplatte (3a) lichtdurchlässig bleibt, und/oder
- beim Erzeugen einer erhabenen Struktur (5') und Abtragen des Materials um
die erhabene Struktur (5') herum zumindest beim Abtragen der letzten Schicht die Energie des Lasers (12) so hoch eingestellt wird, dass gleichzeitig eine Schwärzung der Rückseite des verbleibenden Materials eintritt.

14. Verfahren nach einen der vorhergehenden Verfahrensansprüche,
**dadurch gekennzeichnet, dass**
- die Frontabdeckung (3) hergestellt wird durch Mehrkomponenten-Kunststoffspritzen mit nebeneinander angeordneten Bereichen einerseits eines lichtdurchlässigen und andererseits eines lichtundurchlässigen Kunststoffes, die jeweils von der Rückseite (3') bis zur Vorderseite durchgehen, und insbesondere
- das Spritzen so erfolgt, dass die Trennflächen zwischen den Bereichen in definierter Schräglage zur Tiefenrichtung stehen.

15. Verfahren nach einen der vorhergehenden Verfahrensansprüche,
**dadurch gekennzeichnet, dass**
- bei schichtweisem Abtragen des Materials mittels Laser (12) die Ränder der einzelnen Schichten (15a, b...) zueinander versetzt angeordnet sind und eine gestuft schräg in die Tiefe oder Höhe verlaufende Seitenwand (7) bilden, und insbesondere
- zur Erzeugung einer glatten, schrägstehenden Seitenwand (7) die gestufte schrägstehende Seitenwand (7) anschließend mittels einem analog schräg einfallenden Laserstrahl zusätzlich geglättet wird, und/oder
- der Schweißrahmen (3c) und die Frontplatte (3a) in einem mehrstufigen Kunststoffspritzverfahren einstückig miteinander gespritzt werden, und/oder
- das Ultraschall-Verschweißen von Frontabdeckung (3) und Führungskörper (2) erfolgt, in dem die Frontabdeckung (3) auf den Amboss aufgelegt und der Führungskörper (2), insbesondere dessen radial nach außen vorstehender Rand (2a), von der Rückseite mit der Ultraschall-Sonotrode beaufschlagt wird.

16. Verfahren nach einen der vorhergehenden Verfahrensansprüche,
**dadurch gekennzeichnet, dass**
- das Verschweißen mittels Laser geschieht durch Schweißöffnungen im radial vorstehenden Rand (2) des Führungskörpers (2) hindurch gegen den Schweißrahmen (3c) oder durch radial von außen auf die Fuge zwischen Schweißrahmen (3c) und Führungskörper (2) vorhandene Kontaktfläche, und/oder
- die lichtdurchlässige Frontplatte (3a) aus mehreren Schichten (3a1, 3a2) unterschiedlicher lichtdurchlässiger Materialien, insbesondere Kunststoffe, besteht, die Laserlicht unterschiedlicher Frequenzen absorbieren und mittels Laser (12.1 und 12.2) dieser Frequenzen nacheinander oder gleichzeitig in den Rückseiten der einzelnen Schichten (3a1, 3a2) gleichgeformte, insbesondere sich deckende oder seitlich zueinander versetzte, oder auch unterschiedlich geformte, vertiefte Strukturen (5.1, 5.2) hergestellt werden, und/oder
- im Inneren der lichtdurchlässigen Schicht (3a) ein real dreidimensionales Symbol erzeugt wird mittels zweier sich kreuzender, gleichzeitig eingebrachter Laserstrahlen, deren Energie lediglich im Kreuzungspunkt, der im Inneren der lichtdurchlässigen Schicht liegt, eine Materialveränderung bewirkt und dieser Kreuzungspunkt so variiert wird, dass das gewünschte dreidimensionale Objekt entsteht.

## Claims

1. A functional element (1) in particular for an application as an operating key, decorative element or display element, comprising:
- a front cover (3) with at least one light pass-through (4),
- which front cover is fixated on a forward open side of a support element (2), in particular permanently fixated, wherein the support element (2) extends from the front cover (3) backward in depth direction (10),
- wherein the light pass-through (4) is arranged on a backside (3') of the front cover (3), wherein the backside is oriented towards the support element (2), and
- wherein the front cover (3) is made from a light permeable front plate (3a) and a light impermeable layer (3c) applied on a backside, wherein the light impermeable layer (3c) is penetrated by the light pass-through (4),
- wherein the light permeable front plate (3a) includes a light impermeable welding frame (3b) in its outer edge portions, the light impermeable welding frame circumferentially extending at a backside (3') along a circumference of the light impermeable front plate,
- wherein the light pass-through (4) additionally includes a structure (5, 5') that is recessed or raised in depth direction (10) relative to the backside (3'),
- wherein a color layer (17) made from a light permeable material is arranged on a backside of the front cover (3) at least in a portion of the light pass-through (4).

2. The functional element according to one of the preceding claims,
- wherein the front plate (3a) and the welding frame (3b) are integrally configured with one another in one piece, in particular welded together, and/or
- wherein the functional element (1) includes an illuminant, in particular a light emitting diode (6) in its support element (2), in particular at a rear end of the support element (2).

3. The functional element according to one of the preceding claims,
- wherein a recessed structure (5) has at least a lenticular base (14), in particular a lenticular cross-section,
- wherein the color layer (17) made from light permeable material also extends to a backside of the light permeable layer (3c).

4. The functional element according to one of the preceding claims,
- wherein the side walls (7) of a recessed structure (5) extend parallel to one another at least in one defined direction, in particular in two directions that intersect one another and/or
- wherein the sidewalls (7) of the recessed structure extend like steps at a slant angle relative to the main plane (19),
- wherein the surface of the raised recessed structure (5, 5') includes a plurality of adjacent, in particular lenticular protrusions (8) which either only join one another in cross-sectional direction or also in a longitudinal direction of the recessed structure (5) and in particular,
- wherein the focal points of the protrusions (8) directed towards the light source intersect at a common point at least viewed in a cross-section of the raised structure (5).

5. The functional element according to one of the preceding claims,
- wherein the support element (2) has a circumferentially closed cross-section viewed in depth direction (10),
- wherein the support element (2) is open at the rear end, and
- wherein the support element (2) includes an outward protruding circumferential edge (2a) at the front end

6. The functional element according to one of the preceding claims,
- wherein the front cover (3) includes portions that continue from a front side to a backside (3') and which are arranged adjacent to one another and which are made on the one hand side from light permeable materials and on the other hand side from light impermeable materials, in particular plastic materials and in particular
- when there are plural alternating light permeable and light impermeable material portions that are arranged adjacent to one another, the dividing surfaces are arranged at a defined slant angle relative to the depth direction (10).

7. The functional element according to one of the preceding claims,
- wherein a hologram is arranged on a backside (3') of the front cover in the portion of the light pass-through (4), and/or
- the raised structure (5) or the recessed structure (5') is arranged so that two different symbols are detectable when an illumination is performed by two different illuminants from two different illumination directions from the front side and in particular
- wherein a cross-section of the raised structure (5') is cambered concave so that a lenticular shape is generated whose focal point is oriented in a direction of a viewer and is arranged in a predefined external viewing point.

8. The functional element according to one of the preceding claims,
- wherein punctiform or line shaped welding buds (9) are arranged circumferentially extending on the backside of the welding frame (3b) and/or
- wherein the front plate (3a) is made from colored through light permeable material.
(Real three-dimensional symbol)

9. The functional element according to one of the preceding claims,
- wherein the light permeable front plate (3a) is made from plural layers (2a1, 3a2) made from different light permeable materials, wherein the layers respectively absorb laser light with different frequencies and in particular the illuminant is arranged lateral to the respective layer and/or
- wherein a real three-dimensional symbol is provided in an interior of the light permeable layer (3a).

10. A method for producing a functional element (1) in particular for being used as an operating key, decorative element or display element, comprising:
- a front cover (3) with at least one light pass-through (4),
- which is fixated on a forward open side of a support element (2), wherein the support element (2) extends from the front cover (3) backward in depth direction (10),
- wherein the light pass-through (4) is arranged on a backside (3') of the front cover (3), wherein the backside is oriented towards the support element (2),
- wherein initially the light pass-through (4) is produced at the front cover (3) in that a light impermeable layer (3c) is applied to the backside (3c) of the light permeable front plate (3a) and in this layer (3c), interruptions as a light pass-through are generated either through subsequent removal of the light impermeable layer (3c) e.g. through laser impact or through covers on the backside (3c) when applying the light impermeable layer (3c),
- wherein the front cover (3) is subsequently fixated on the front face of the support element (2), in particular welded, and
- wherein the front cover (3) is produced first through integral connection of a light permeable front plate (3a) and a welding frame (3b) connected therewith that is arranged on the backside (3') of the front plate (3) and extends circumferentially over the entire circumference which is made from a light impermeable material,
- wherein in addition to the gap (4) in the light impermeable layer (3c), a recessed structure (5) or a raised structure (5') is generated in a form of a desired symbol on the backside (3') of the light permeable front plate (3a) so that the structure has a shape that is identical to the gap (4),
- wherein a color layer (17) made from light permeable material is applied to the backside of the front cover (3) in the portion of the light pass-through (4).

11. A method according to one of the preceding method claims,
- wherein the front cover (3) is welded to the front face of the support element, in particular ultrasonically welded, and/or
- wherein the front plate (3a) is integrally connected with the welding frame (3b), and/or
- wherein the recessed or raised structure (5, 5') is generated by master forming during production, in particular plastic injection molding of the front plate (3a), or
- wherein the raised or recessed structure (5, 5') is provided on a front plate (3a) made from thermoplastic material through thermoplastic deformation through embossing a hot stamp.

12. The method according to one of the preceding method claims,
- wherein producing the recessed / raised structure (5, 5') through laser impact is performed in particular through a laser (12), in particular from a front side (3') of the front plate (3a) and/or
- wherein the recessed structure (5) is provided through burning recesses into the backside (3c) through the laser (12), and/or
- wherein producing the raised structure (5') is provided through a burn off, in particular a layered burn off of surrounding material of the front plate (3a) about the desired raised structure (5') on the backside (3c) and in particular,
- wherein focusing and distance of the laser (12) from the backside (3') is selected so that a base of the generated recess has the desired lenticular camber.

13. The method according to one of the preceding method claims,
- wherein the recessed structure (5) is produced through impact with a laser (12) from two different impact directions (13a, b), so that the sidewalls (7) of the respective impact channels have different directions according to the impact directions (13a, b), and/or
- wherein an energy of the laser is adjusted low enough during layered removal of material from the front plate (3a) at least when removing the last layer, so that the surface of the remaining material of the front plate (3a) remains light permeable, and/or
- wherein the energy of the laser (12) is adjusted high enough when generating a raised structure (5') and removing the material about the raised structure (5') at least during removing the last layer, so that a blackening of the backside of the remaining material is simultaneously provided.

14. The method according to one of the preceding method claims,
- wherein the front cover (3) is produced through multi component plastic injection molding with portions arranged adjacent to one another, on the one hand side of a light permeable plastic material, and on the other hand side of a light impermeable plastic material which respectively continue from the backside (3') to the front side, and in particular
- wherein the injection molding is provided so that the dividing surfaces between the portions are at a defined slant angle to depth direction.

15. The method according to one of the preceding method claims,
- wherein during layered removal of the material with the laser (12), edges of the respective layers (15a, b...) are arranged offset relative to one another, forming a sidewall (7) extending at a slant angle with steps into the depth or height and in particular
- wherein the slanted sidewall (7) with steps is subsequently additionally smoothened through an analogously slanted impacting laser beam in order to generate the smooth slanted sidewall (7), and/or
- wherein the welding frame (3c) and the front plate (3a) are integrally injection molded in a multi stage plastic injection molding method, and/or
- wherein ultrasound welding of front cover (3) and support element (2) is provided in that the front cover (3) is placed onto the anvil and the support element (2), in particular its radially outward protruding edge (2a), is loaded from the backside with an ultrasound sonotrode.

16. The method according to one of the preceding method claims,
- wherein welding is performed through a laser through weld openings in the radially protruding edge (2) of the support element (2) against the welding frame (3c) or through a contact surface provided radially outside on the gap between the welding frame and the support element (2), and/or
- wherein the light permeable front plate (3a) is made from plural layers (3a1, 3a2) of different light permeable materials, in particular plastics which absorb laser light of different frequencies and wherein the laser (12.1 and 12.2) with these frequencies generates structures (5.1, 5.2) subsequently or simultaneously in the backsides in the particular layers (3a1, 3a2), wherein the structures have identical, in particular matching shapes or shapes that are laterally offset relative to one another or also different shapes,
- wherein a real three-dimensional symbol is generated in the interior of the light permeable layer (3a) through two intersecting simultaneously imparted laser beams, whose energy is only provided in the intersection point of the interior light permeable layer wherein a material change is effected and the intersection point is varied so that a desired three-dimensional object is produced.

## Revendications

1. Elément de fonction (1), en particulier pour l'utilisation en tant que touche de commande, élément de décoration ou d'affichage, comprenant
- une couverture frontale (3) avec au moins un passage de lumière (4),
- laquelle est fixée sur la face ouverte avant d'un corps de guidage (2), en particulier de manière inamovible, qui s'étend vers l'arrière dans le sens de la profondeur (10) depuis la couverture frontale (3),
- le passage de lumière (4) étant disposé sur la face arrière (3') de la couverture frontale (3), tournée vers le corps de guidage (2), et
- la couverture frontale (3) se composant d'une plaque frontale translucide (3a) et d'une couche opaque appliquée sur sa face arrière, couche qui est traversée par le passage de lumière (4),
**caractérisé en ce que**
- la plaque frontale translucide (3a) présente sur sa face arrière (3') dans ses zones externes de bordure, un cadre de soudure (3b) opaque le long de la périphérie,
- le passage de lumière (4) se compose en supplément d'une structure (5, 5') en creux dans le sens de la profondeur (10) par rapport à la face arrière (3') ou d'une structure en relief (5, 5'),
- sur la face arrière du couvercle frontal (3) au moins dans la zone du passage de lumière (4), il est disposé une couche de couleur (17) en matériau translucide.

2. Elément de fonction selon l'une des revendications précédentes,
**caractérisé en ce que**
- la plaque frontale (3a) et le cadre de soudure (3b) sont formées d'une seule pièce entre eux, en particulier sont soudés, et/ou
- l'élément de fonction (1) présente dans le corps de guidage (2), en particulier sur l'extrémité arrière du corps de guidage (2), une source de lumière, en particulier une diode lumineuse (6).

3. Elément de fonction selon l'une des revendications précédentes **caractérisé en ce qu'**
- une structure en creux (5) présente observée dans la section transversale au moins un fond lentiforme (14) en particulier une section transversale lentiforme,
- la couche de couleur (17) en matériau translucide s'étend également sur la face arrière de la couche opaque (3c).

4. Elément de fonction selon l'une des revendications précédentes **caractérisé en ce que**
- les parois latérales (7) d'une structure en creux (5) sont réalisées parallèles entre elles dans au moins une direction définie, en particulier dans deux directions se croisant, et/ou
- les parois latérales (7) de la structure en creux (5) sont réalisées par palier incliné par rapport au plan principal (19),
- la surface de la structure en creux en relief (5, 5') se compose d'un grand nombre d'élévations (8) juxtaposées, en particulier lentiformes, qui ne s'alignent que dans la section transversale ou également dans la direction longitudinale de la structure en relief (5) et en particulier,
- les points de brûlure des élévations (8) dirigées vers la source de lumière se rencontrent à un point commun au moins dans la section transversale de la structure en relief (5).

5. Elément de fonction selon l'une des revendications précédentes **caractérisé en ce que**
- le corps de guidage (2) possède une section transversale fermée dans la direction de la profondeur (10),
- le corps de guidage (2) est ouvert à l'extrémité arrière et
- le corps de guidage (2) présente sur l'extrémité avant un bord (2a) circulaire faisant saillie vers l'extérieur.

6. Elément de fonction selon l'une des revendications précédentes **caractérisé en ce que**
- la couverture frontale (3) se compose de zones continues de la face avant à la face arrière (3'), juxtaposées avec en alternance un matériau translucide et un matériau opaque, en particulier des matériaux plastiques et en particulier
- dans le cas d'une pluralité de zones de matériaux juxtaposées en alternance, translucides et opaques, les surfaces de séparation s'étendent de manière définie selon un plan incliné par rapport à la direction de profondeur (10).

7. Elément de fonction selon l'une des revendications précédentes **caractérisé en ce que**
- sur la face arrière (3') de la couverture frontale dans la zone du passage de lumière (4), il est prévu un hologramme, et/ou
- la structure en relief (5) ou la structure en creux (5') est disposée de sorte qu'en cas d'éclairage au moyen de deux sources lumineuses depuis deux directions d'éclairage différentes, on peut reconnaître depuis la face avant deux symboles différents, et en particulier
- la section transversale de la structure en relief (5') est concave de manière à prendre la forme d'une lentille, dont le foyer est dirigé en direction de l'observateur et se trouve dans un point d'observation prédéfini externe.

8. Elément de fonction selon l'une des revendications précédentes **caractérisé en ce que**
- sur la face arrière du cadre de soudure (3b), il est prévu des élévations de soudure (9) ponctuelles ou lentiforme s'étendant dans la direction périphérique, et/ou
- la plaque frontale (3a) se compose de matériaux translucides teintés (symbole réel tridimensionnel)

9. Elément de fonction selon l'une des revendications précédentes **caractérisé en ce que**
- la plaque frontale translucide (3a) se compose de plusieurs couches (2a1, 3a2) de différents matériaux translucides, qui absorbent respectivement la lumière laser de fréquences différentes et en particulier la source lumineuse est disposée latéralement par rapport à la source respective, et/ou
- à l'intérieur de la couche translucide (3a), il est prévu un symbole tridimensionnel réel.

10. Procédé pour la fabrication (1) en particulier pour l'utilisation en tant que touche de commande, élément de décoration ou d'affichage, comprenant
- une couverture frontale (3) avec au moins un passage de lumière (4),
- laquelle est fixée sur la face ouverte avant d'un corps de guidage (2), en particulier de manière inamovible, qui s'étend vers l'arrière dans le sens de la profondeur (10) depuis la couverture frontale (3),
- le passage de lumière (4) étant disposé sur la face arrière (3') de la couverture frontale (3), tournée vers le corps de guidage (2), et
- tout d'abord le passage de lumière (4) étant fabriqué sur la couverture frontale (3), dans le fait que sur la face arrière (3c) de la plaque frontale translucide (3a) il est appliqué une couche opaque (3c) et dans cette couche (3c), il est ménagé des discontinuités sous forme de passages de lumière soit par retrait ultérieur de couche translucide (3c) par exemple par bombardement laser ou par des recouvrements sur la face arrière (3c) à l'application de la couche translucide (3c),
- ensuite la couverture frontale (3) étant soudée sur la surface avant frontale du corps de guidage (2), en particulier soudée, et
- auparavant la couverture frontale (3) étant fabriquée par une connexion d'un seul morceau d'une plaque frontale (3a) translucide, et par un cadre de soudage (3b) circulaire sur l'ensemble de la périphérie, disposé sur la face arrière (3') de la plaque frontale (3) en matériau opaque,
**caractérisé en ce que**
- en plus de l'espace (4) dans la couche opaque (3c) sur la face arrière (3') de la plaque frontale opaque (3a), il est généré en concordance une structure en creux (5) ou une structure en relief (5') sous forme d'un symbole recherché,
- sur la face arrière de la couverture frontale (3) dans la zone du passage de lumière (4), une couche de couleur (17) en matériaux translucide étant appliquée.

11. Procédé selon l'une des revendications précédentes,
**caractérisé en ce que**
- la couverture frontale (3) est soudée, en particulier par ultrasons sur la surface frontale du corps de guidage et/ou
- la plaque frontale (3a) est reliée d'une seule pièce au cadre de soudage (3b), et/ou
- la structure en creux ou en relief (5, 5') est générée par déformation au moment de la fabrication par injection de plastique de la plaque frontale (3a), ou
- la structure en creux ou en relief (5, 5') s'effectue sur une plaque frontale (3a) en matériau thermoplastique par déformation thermoplastique en appliquant une matrice chaude.

12. Procédé selon l'une des revendications précédentes,
**caractérisé en ce que**
- la fabrication de la structure en creux/en relief (5, 5') s'effectue par bombardement avec un laser (12) en particulier depuis la face arrière (3') de la plaque frontale (3a), et/ou
- la structure en creux (5) est réalisée par cuisson de cavités dans la face arrière (3c) par laser (12), et/ou
- la fabrication de la structure en relief (5') s'effectue par brûlage, en particulier par brûlage par couche du matériau de l'environnement de la plaque frontale (3a) autour de la structure en relief souhaitée (5') sur la face arrière (3c), et en particulier
- la focalisation ainsi que la distance entre le laser (12) et la face arrière (3') sont sélectionnées de sorte que le fond de la cavité générée présente la courbure souhaitée en forme de lentille.

13. Procédé selon l'une des revendications précédentes,
**caractérisé en ce que**
- la structure en creux (5) est réalisée par bombardement d'un laser (12) depuis deux directions différentes de bombardement (13a, b) de sorte que les parois latérales (7) des canaux de tir respectifs présentent différentes directions correspondant aux directions de tir (13a, b), et/ou l'énergie du laser est réglée si faible pour le dénudage par couche de matériau de la plaque frontale (3a), au moins le dénudage de la dernière couche de sorte que la surface du matériau restant de la plaque frontale (3a) reste translucide, et/ou
- à la génération d'une structure en relief (5') et au dénudage du matériel autour de la structure en relief (5') au moins par dénudage de la dernière couche, l'énergie du laser (12) est réglée si élevée qu'en même temps un noircissement de la face arrière du matériau restant se produit.

14. Procédé selon l'une des revendications précédentes,
**caractérisé en ce que**
- la couverture frontale (3) est fabriquée par injection de matière plastique multi-composants avec des zones juxtaposées d'une part d'une matière plastique translucide et d'autre part d'une matière plastique opaque, qui vont de la face arrière (3') jusqu'à la face avant et en particulier
- l'injection s'effectue de sorte que les surfaces de séparation entre les zones soient en position inclinée définie par rapport à la direction de profondeur.

15. Procédé selon l'une des revendications précédentes,
**caractérisé en ce que**
- pour le dénudage par couche du matériau par laser (12), les bords de chacune des couches (15a, b...) sont disposés décalés entre eux et forment une paroi latérale (7) inclinée par palier s'étendant en profondeur et en hauteur et en particulier
- pour la génération d'une paroi latérale lisse et inclinée (7), la paroi latérale (7), inclinée, étagée est lissée ensuite en supplément au moyen d'un rayon laser incident de manière inclinée analogue, et/ou
- le cadre de soudure (3c) et la plaque frontale (3a) sont injectés pour former une seule pièce dans un procédé par injection de matière plastique à plusieurs phases et/ou
- la soudure par ultrasons de la couverture frontale (3) et le corps de guidage (2) s'effectue dans le fait que la couverture frontale (3) est placée sur l'enclume et le corps de guidage (2), en particulier son bord (2a) faisant saillie radialement vers l'extérieur, subissent l'impact du sonotrode à ultrasons par la face arrière.

16. Procédé selon l'une des revendications précédentes,
**caractérisé en ce que**
- le soudage s'effectue au laser par des ouvertures de soudage dans le bord saillant radialement (2) du corps de guidage (2) en direction du cadre de soudage (3c) ou par la surface de contact existante radialement de l'extérieur sur le joint entre le cadre de soudage (3c) et le corps de guidage (2), et/ou
- la plaque frontale translucide (3a) se compose de plusieurs couches (3a1, 3a2) de matériaux translucides différents, en particulier des matières plastiques qui absorbent la lumière laser de fréquences différentes, et au moyen des lasers (12.1 et 12.2) à ces fréquences simultanément ou successivement des structures en creux (5.1, 5.2) sont fabriquées dans les faces arriérée de chacune des couches (3a1, 3a2) de forme identique, en particulier se superposant ou décalées latéralement entre elles ou de forme différentes, et/ou
- à l'intérieur de la couche translucide (3a), il est réalisé un symbole réel tridimensionnel au moyen de deux rayons laser se croisant et envoyés simultanément, dont l'énergie provoque une modification du matériau simplement au point d'intersection qui se trouve à l'intérieur de la couche translucide, et ce point d'intersection varie de manière à obtenir l'objet tridimensionnel souhaité.
